# NEUE EUROPÄISCHE PATENTSCHRIFT

(11) **EP 2 917 019 B2**
(45) Veröffentlichungstag und Bekanntmachung des Hinweises auf die Entscheidung über den Einspruch: **26.05.2021**
(45) Hinweis auf die Patenterteilung: 04.01.2017
(21) Anmeldenummer: 13817852.0
(22) Anmeldetag: 11.11.2013
(51) Int. Cl.: B29C 49/06, B29C 49/12, B29C 49/36, B29C 49/42, B29C 49/48, B29C 49/56, B29C 49/78

(54) **VERFAHREN UND VORRICHTUNG ZUR BLASFORMUNG VON BEHÄLTERN MIT EINER ANTRIEBSEINRICHTUNG UND MIT GEKOPPELTEN BEWEGUNGSABLÄUFEN**
METHOD AND DEVICE FOR BLOW MOLDING CONTAINERS, COMPRISING A DRIVE DEVICE AND COUPLED MOVEMENT PROCEDURES
PROCÉDÉ ET DISPOSITIF DE MOULAGE PAR SOUFFLAGE DE RÉCIPIENTS COMPRENANT UN DISPOSITIF D'ENTRAÎNEMENT ET DES SÉQUENCES DE MOUVEMENTS COUPLÉES

(30) Priorität: 12.11.2012 DE 102012022028
(43) Veröffentlichungstag der Anmeldung: 16.09.2015
(73) Patentinhaber: KHS Corpoplast GmbH, 22145 Hamburg (DE)
(72) Erfinder: VAN HAMME, Thomas, 24629 Kisdorf (DE); BAUMGARTE, Rolf, 22926 Ahrensburg (DE); LEWIN, Frank, 22889 Tangstedt (DE); LINKE, Michael, 22159 Hamburg (DE)
(74) Vertreter: Eisenführ Speiser
(86) Internationale Anmeldenummer: PCT/DE2013/000669
(87) Internationale Veröffentlichungsnummer: WO 2014/071917

(56) Entgegenhaltungen:
- EP-A1- 2 199 061
- EP-A1- 2 202 047
- EP-A1- 2 412 513
- EP-A2- 2 218 569
- EP-A2- 2 383 102
- EP-A2- 2 422 956
- WO-A1-02/34500
- WO-A1-2008/138293
- DE-A1-102004 045 405
- DE-A1-102009 006 508
- DE-A1-102010 003 623
- GB-A- 2 004 805
- US-A1- 2008 260 888
- US-A1- 2010 047 375
- US-A1- 2010 156 009
- US-A1- 2010 203 187
- US-A1- 2012 052 147
- MICHAEL THIELEN et al.: Blasformen von Kunststoff-Hohlkörpern, 2006, pages 168-181, München Wien

## Beschreibung

Die Erfindung betrifft ein Verfahren zur Blasformung von Behältern, bei dem ein Vorformling aus einem thermoplastischem Material in einer Blasstation nach einer thermischen Konditionierung innerhalb einer Blasform von einer Reckstange gereckt und durch Blasdruckeinwirkung in den Behälter umgeformt wird. Die Erfindung bezieht sich auf den Antrieb der in einem Blasformungszyklus zu bewegenden Teile der Blasstation und auf deren Bewegungskopplung. Zu bewegende Teile können z.B. die Blasformhälften, das Bodenteil, die Reckstange, der Pneumatikblock und ggf. eine Verriegelungseinrichtung für die Blasformhälften sein.

Die Erfindung betrifft darüber hinaus eine Vorrichtung zur Blasformung von Behältern aus einem thermoplastischen Material, die mindestens eine mit einer Blasform versehene Blasstation aufweist und die mit einer Reckeinrichtung versehen ist, in deren Bereich eine Reckstange zur Beaufschlagung eines in die Blasform einsetzbaren Vorformlings angeordnet ist. Die Erfindung bezieht sich auch hier auf den Antrieb der in einem Blasformungszyklus zu bewegenden Teile einer Blasstation und auf deren Bewegungskopplung. Zu bewegende Teile können z.B. die Blasformhälften, das Bodenteil, die Reckstange, der Pneumatikblock und ggf. eine Verriegelungseinrichtung für die Blasformhälften sein.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Unabhängig davon, ob rotierende oder stationäre Blasstationen eingesetzt werden, müssen für das Öffnen und Schließen der Blasformhälften, für die Bewegung der Reckstange und für weitere Bewegungen von für den Blasformungsprozess relevanten Elementen der Blasstation Antriebseinrichtungen vorgesehen werden zur Bereitstellung der erforderlichen Antriebsenergie. Zudem müssen die Bewegungen bestimmter Elemente der Blasstation aufeinander abgestimmt werden, also zueinander koordiniert erfolgen.

Bei auf einem Blasrad angeordneten, rotierenden Blasstationen erfolgt regelmäßig ein Antrieb bestimmter Elemente der Blasstation über Kurvensteuerungen, wobei ein mit dem Blasrad rotierender Abnehmer an einer feststehenden Steuerkurve entlanggeführt wird. Solche externen Kurvensteuerungen als Antriebseinrichtung nutzen die ohnehin notwendige Drehung des Blasrades. Nachteilig bei diesen externen Kurvensteuerungen ist, dass die Inbetriebnahme eines Blasrades und der darauf angeordneten Blasstationen hohe Justageanforderungen mit sich bringt, da die exakte Steuerung der Blasstation eine exakte Ausrichtung zwischen Blasstation und feststehender Steuerkurve erforderlich macht. Die DE 10 2004 045 405 A1 beschreibt z.B. den Einsatz einer solchen externen Kurvensteuerung für die Bewegungen der Blasformhälften und des Bodenteils der Blasstation. Die DE 10 2009 006 508 A1 beschreibt z.B. die extern kurvengesteuerte Hubbewegung des Pneumatikblockes von und in die Blasposition.

Es sind zu diesen externen Kurvensteuerungen im Stand der Technik auch alternative oder zusätzliche Antriebseinrichtungen bekannt, z.B. elektrisch, pneumatisch oder hydraulisch betriebene Antriebseinrichtungen. Dazu sind elektrische, hydraulische oder pneumatische Zuleitungen vorzusehen, die den elektrischen Antriebsmotor bzw. den Pneumatik- oder Hydraulikzylinder versorgen. Die mittels der Zuleitungen zugeführte elektrische, pneumatische oder hydraulische Energie wird in diesen auf dem Blasrad angeordneten Antriebseinrichtungen in Bewegungsenergie umgesetzt und zum Antrieb der zu bewegenden Elemente eingesetzt.

Es ist aus dem Stand der Technik auch bekannt, dass nicht jedes zu bewegende Element über eine eigene Antriebseinrichtung angetrieben wird. Vielmehr ist es regelmäßig so, dass bestimmte Elemente in ihrer Bewegung gekoppelt sind, weil die Elemente koordiniert zueinander bewegt werden müssen. Die bereits genannte DE 10 2004 045 405 A1 offenbart z.B. eine Bewegungskopplung der Blasformhälften und des Bodenteils. Beide werden gemeinsam von einer externen Kurvensteuerung angetrieben. Die ebenfalls bereits angesprochene DE 10 2009 006 508 A1 offenbart eine zumindest zeitweise Bewegungskopplung der Reckstange mit dem Pneumatikblock. Der Antrieb erfolgt einerseits durch eine externe Kurvenbahn, die die Hubbewegung des mit einer Kurvenrolle versehenen Pneumatikblockes bewirkt, andererseits durch einen Servomotor, der die Reckstange antreibt.

Es ist auch bekannt, die Reckstange unter Verwendung von Kurvenrollen zu positionieren, die entlang von externen Kurvenbahnen geführt sind. Auch Recksysteme unter Verwendung von elektrischen Linearmotoren sind im Stand der Technik bekannt. Bekannt geworden sind ebenfalls reine pneumatische Recksysteme sowie Hybridsysteme, bei denen sowohl pneumatische Antriebe als auch Linearmotoren zum Einsatz kommen.

Für die positionierbare Blasgaszuführung werden üblicherweise pneumatische Stelleinrichtungen oder Kurvensteuerungen verwendet, die den Pneumatikblock anheben und absenken, der hierbei gegen den aufzublasenden Vorformling bzw. gegen einen Kontaktbereich der Blasformen geführt und derart gegenüber dem jeweiligen Kontaktbereich verspannt wird, dass eine ausreichende Druckdichtigkeit bereitgestellt ist, um den Blasdruck durch Zufuhr des Blasgases aufzubauen.

Aufgabe der vorliegenden Erfindung ist es, ein Verfahren der einleitend genannten Art anzugeben, durch das ein einfacher Antrieb und eine einfache Koordinierung der Bewegungen der zu bewegenden Elemente erreicht wird. Insbesondere soll der Aufwand bei der Installation der Blasmaschine und der einzelnen Blasstationen gering gehalten werden.

Diese Aufgabe wird erfindungsgemäß gelöst durch ein Verfahren zur Blasformung von Behältern nach Anspruch 1.

Insbesondere wird die Aufgabe durch das erfindungsgemäße Verfahren dadurch gelöst, dass wenigstens drei Positionierbewegungen der Blasstation mechanisch bewegungsgekoppelt ausgeführt und von einer gemeinsamen Antriebseinrichtung angetrieben werden. Diese wenigstens drei Positionierbewegungen sind aus der Gruppe "Bewegung der Reckstange", "Bewegung der Blasformhälften", "Bewegung des Bodens", "Bewegung des Pneumatikblockes" auszuwählen. Erfindungsgemäss ist eine der bewegungsgekoppelten Positionierbewegungen der Blasstation die Reckstangenbewegung. Insbesondere ist es die als Reckstangenantrieb ausgebildete Antriebseinrichtung, die auch die wenigstens zwei weiteren Positionierbewegungen antreibt, insbesondere auch die Positionierbewegung wenigstens einer der Blasformhälften und die der Bodenform antreibt, und die somit einen Blasformantrieb bildet, wobei die Reckstangenbewegung durch eine mechanische Kopplung auf die Blasformhälften und auf den Blasformboden übertragen wird. Aufgrund der Bewegungskopplung kann eine Antriebseinrichtung eingespart werden und eine notwendige Synchronisation ist erleichtert. Es ergeben sich auch Vorteile in der Justage. Bezogen auf die bevorzugte Ausführungsform der von dem Reckstangenantrieb angetriebenen Reckstangenbewegung und der davon abgeleiteten Bewegung der Blasformhälften und des Blasformbodens ergeben sich konstruktiv einfache Verhältnisse bei der mechanischen Kopplung, die auf der Blasstation realisiert ist, und es kann hier eine Vorjustage erfolgen, bevor die Blasstation z.B. auf einem Blasrad angeordnet wird. Zudem lässt sich eine Antriebseinrichtung einsparen, nämlich vorliegend der Blasformantrieb.

Als weiterer Vorteil ergibt sich, insbesondere bei den vorteilhaften Ausgestaltungen in den Unteransprüchen, dass jede Blasstation individuell betrieben und angesteuert werden kann. Die Antriebseinrichtung kann beliebig ausgebildet sein, insbesondere als ein linearer Antrieb, und insbesondere elektrisch, hydraulisch oder pneumatisch.

Besonders bevorzugt ist, dass die Blasstation auf einem rotierenden Blasrad und auf dem Blasrad mit diesem rotierend die Antriebseinrichtung, insbesondere der Reckstangenantrieb, angeordnet ist oder wird. Rotierende Blasvorrichtungen erreichen höhere Produktionsraten als taktweise arbeitende Linearmaschinen.

Vorzugsweise ist am Blasrad keine externe Kurvensteuerung für die Blasstation vorgesehen ist Durch das Weglassen der ansonsten bei Rundläufermaschinen üblichen externen Kurvensteuerung werden zwei Vorteile erreicht. Zum einen werden keine äußeren Kräfte auf das Blasrad übertragen, so dass eine erhebliche Reduzierung der Maschinenschwingung festgestellt wurde und daraus bisher resultierende Probleme behoben sind. Zum anderen lässt sich durch Aufgabe des Konzeptes der externen Kurvensteuerung die Blasstation vollständiger vormontieren und einstellen. Ein erheblicher Teil der aufwendigen Justagearbeiten bei der Endmontage des Blasrades entfällt. Die Blasstation kann vorab so justiert und eingestellt werden, das bei der Anbringung auf dem Blasrad eine Plug-and-Play-Montage ohne weitere Nachjustierungen möglich ist. Die Erfindung bietet überdies den weiteren Vorteil, dass auch die Fehlersuche, die Wartung und der Blasformwechsel vereinfacht durchgeführt werden können, da die Blasstationen auch im Stillstand des Blasrades den Blaszyklus durchlaufen oder die Blasstationen geöffnet werden können.

Wenn auf dem Blasrad mehrere Blasstationen vorgesehen sind, ist es möglich, dass mehrerer Blasstationen eines Blasrades einen gemeinsamen Antrieb als Reckstangenantrieb nutzen, z.B. paarweise. Bevorzugt ist aber, dass jede Blasstation des Blasrades mit einer eigenen Antriebseinrichtung, insbesondere mit einem eigenen Reckstangenantrieb, ausgestattet wird. Dadurch kann die Blasstation mit den Antriebselementen, die vom Reckstangenantrieb angetrieben werden, vollständig vormontiert werden.

Die Bewegung der Reckstange ist für das Ergebnis des Blasformungsprozesses von einiger Bedeutung. Daher treibt der Reckstangenantrieb mit Vorteil die Reckstange an, und die Bewegung der Blasformhälften und des Blasformbodens wird von der Bewegung der Reckstange mechanisch abgeleitet. Dies wird auch deshalb als vorteilhaft angesehen, weil die Reckstangenbewegung nahezu über den gesamten Blasformungsprozesszyklus hinweg andauert, während das Öffnen und Schließen der Blasform nur in bestimmten Zeitfenstern des Blasformungszyklus erfolgt. Eine auch noch vom Anspruch 1 abgedeckte Umkehrung dieses Prinzips wird demgegenüber als nachteilig angesehen, also z.B. der Antrieb der Blasformhälften und der Bodenform, und die Ableitung der Reckstangenbewegung von deren Bewegung.

Bei der Art der Bewegungsableitung von der Reckstangenbewegung zu den Blasformhälften und der Bodenform besteht große konstruktive Freiheit. Es wird allerdings als vorteilhaft angesehen, dass die Bewegungsableitung über eine Kurvensteuerung erfolgt, die eine sichere und exakte Bewegungsführung erlaubt. Mit Vorteil ist dabei der Abnehmer reckstangenseitig und die Steuerkurve blasformhälftenseitig angeordnet.

Es wird weiterhin als Vorteil angesehen, die Bewegungsübertragung vermittels einer drehbar gelagerten Schwenkachse zu realisieren, die im wesentlichen parallel zur Reckstange verlaufend angeordnet ist, wobei die Reckstangenbewegung über die Kurvensteuerung in eine Drehbewegung der Schwenkachse gewandelt wird. Die Drehbewegung der Schwenkachse treibt schließlich die Bodenform und die Blasformhälften an.

Zur Reduzierung des Materialaufwandes und des Gewichtes wird mit Vorteil vorgeschlagen, dass die Steuerkurve nur über einen Teilweg der Reckstangenbewegung verläuft. Nur auf diesem Teilweg ist der Abnehmer in der Steuerkurve geführt, z.B. bis die Blasformhälften geschlossen sind. Zwar könnte die Steuerkurve auch dann noch einen linearen Bereich ohne Kraftentfaltung auf die Blasform aufweisen, das ist aber nicht erforderlich, so dass Material und Gewicht eingespart werden können.

Es ist besonders bevorzugt, dass auch die Bewegung des positionierbaren Pneumatikblockes an die Bewegung der Reckstange gekoppelt wird. Auch dies fördert die vollständige Vormontage der Blasstation.

Wenn die Blasform positionierbare Verriegelungsmittel, die insbesondere die Blasform in der Geschlossenstellung verriegeln, aufweist, ist es in gleicher Weise vorteilhaft, wenn eine Positionierung der Verriegelungsmittel von der Reckstangenbewegung abgeleitet wird. Nicht alle Blasstationen des Standes der Technik weisen aber solche Verriegelungsmittel auf, so dass eine solche Kopplung oder Ableitung optional ist.

Die Kopplung kann direkt oder indirekt erfolgen, also entweder direkt von der Reckstangenbewegung, oder indirekt durch Ableitung von der Blasformhälften- und/oder Blasformbodenbewegung.

Für die Realisierung des Antriebs enthält der Stand der Technik viele Möglichkeiten. Bevorzugt ist der Reckstangenantrieb von einem Linearmotor gebildet, weil dadurch Probleme vermieden werden, die bei anderen als elektrischen Zuleitungen bestehen.

Weitere Aufgabe der vorliegenden Erfindung ist es, eine Vorrichtung der einleitend genannten Art zu gestalten, die sich durch einen einfachen Antrieb und eine einfache Koordinierung der Bewegungen der zu bewegenden Elemente auszeichnet. Insbesondere soll der Aufwand bei der Installation der Blasmaschine und der einzelnen Blasstationen gering gehalten werden.

Diese Aufgabe wird erfindungsgemäß gelöst durch eine Vorrichtung zur Blasformung von Behältern aus einem thermoplastischen Material nach Anspruch 7.

Besonders bevorzugt ist die Antriebseinrichtung als Reckstangenantrieb zum Antreiben der Reckstange und als Blasformantrieb zum Antreiben der Blasformhälften und der Bodenform ausgebildet. Dabei weist die Blasstation beispielsweise mechanische Ableitmittel auf, die die Reckstangenbewegung auf die Blasformhälften und auf den Blasformboden übertragend ausgebildet ist. Die für das erfindungsgemäße Verfahren genannten Vorteile gelten auch für die erfindungsgemäße Vorrichtung.

Auch bezüglich der vorteilhaften, in den Vorrichtungsunteransprüchen angegebenen Weiterbildungen treten die bereits bei dem erfindungsgemäßen Verfahren bzw. den Verfahrensunteransprüchen diskutierten Vorteile zutage.

Die der Erfindung zugrundeliegenden Aufgaben werden des Weiteren gelöst durch die Verwendung einer erfindungsgemäßen Vorrichtung zum Ausführen eines erfindungsgemäßen Verfahrens oder durch das Ausführen eines erfindungsgemäßen Verfahrens mittels einer erfindungsgemäßen Vorrichtung.

In den Zeichnungen sind Ausführungsbeispiele der Erfindung schematisch dargestellt. Es zeigen:
- Fig. 1: eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4a, b, c: eine Blasstation in perspektivischen Ansichten in unterschiedlichen Stellungen: a) Ausgangsstellung, b) Zwischenstellung und c) Endstellung, und
- Fig. 5a, b: perspektivische Ansichten der Blasstation von unten zu zwei Stellungen der Bodenform: a) Offenstellung, b) Geschlossenstellung.

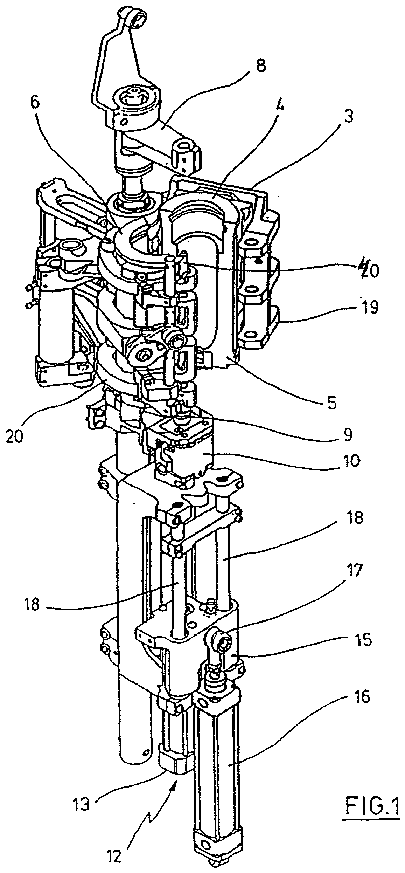

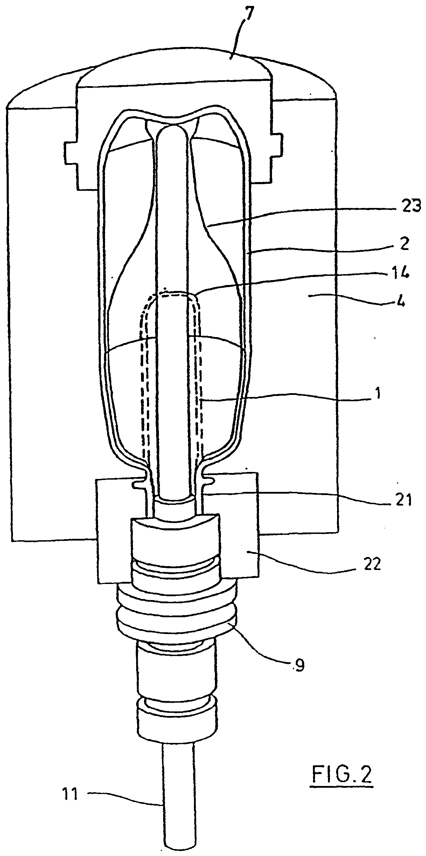

Der prinzipielle Aufbau einer aus dem Stand der Technik bekannten Vorrichtung zur Umformung von Vorformlingen 1 in Behälter 2 ist in Fig. 1 und in Fig. 2 dargestellt.

Die Vorrichtung zur Formung des Behälters 2 besteht im Wesentlichen aus einer Blasstation 3, die mit einer Blasform 4 versehen ist, in die ein Vorformling 1 einsetzbar ist. Der Vorformling 1 kann ein spritzgegossenes Teil aus Polyethylenterephthalat sein. Zur Ermöglichung eines Einsetzens des Vorformlings 1 in die Blasform 4 und zur Ermöglichung eines Herausnehmens des fertigen Behälters 2 besteht die Blasform 4 aus Formhälften 5, 6 und einem Bodenteil 7, das von einer Hubvorrichtung 8 positionierbar ist. Der Vorformling 1 kann im Bereich der Blasstation 3 von einem Transportdorn 9 gehalten sein, der gemeinsam mit dem Vorformling 1 eine Mehrzahl von Behandlungsstationen innerhalb der Vorrichtung durchläuft. Es ist aber auch möglich, den Vorformling 1 beispielsweise über Zangen oder andere Handhabungsmittel direkt in die Blasform 4 einzusetzen.

Zur Ermöglichung einer Druckluftzuleitung ist unterhalb des Transportdornes 9 ein Anschlusskolben 10 angeordnet, der dem Vorformling 1 Druckluft zuführt und gleichzeitig eine Abdichtung relativ zum Transportdorn 9 vornimmt. Bei einer abgewandelten Konstruktion ist es grundsätzlich aber auch denkbar, feste Druckluftzuleitungen zu verwenden.

Eine Reckung des Vorformlings 1 erfolgt bei diesem Ausführungsbeispiel mit Hilfe einer Reckstange 11, die von einem Zylinder 12 positioniert wird. Gemäß einer anderen Ausführungsform wird eine mechanische Positionierung der Reckstange 11 über Kurvensegmente durchgeführt, die von Abgriffrollen beaufschlagt sind. Die Verwendung von Kurvensegmenten ist insbesondere dann zweckmäßig und im Stand der Technik üblich, wenn eine Mehrzahl von Blasstationen 3 auf einem rotierenden Blasrad angeordnet sind.

Bei der in Fig. 1 dargestellten Ausführungsform ist das Recksystem derart ausgebildet, dass eine Tandem-Anordnung von zwei Zylindern 12 bereitgestellt ist. Von einem Primärzylinder 13 wird die Reckstange 11 zunächst vor Beginn des eigentlichen Reckvorganges bis in den Bereich eines Bodens 14 des Vorformlings 1 gefahren. Während des eigentlichen Reckvorganges wird der Primärzylinder 13 mit ausgefahrener Reckstange gemeinsam mit einem den Primärzylinder 13 tragenden Schlitten 15 von einem Sekundärzylinder 16 oder über eine Kurvensteuerung positioniert. Insbesondere ist daran gedacht, den Sekundärzylinder 16 derart kurvengesteuert einzusetzen, dass von einer Führungsrolle 17, die während der Durchführung des Reckvorganges an einer Kurvenbahn entlang gleitet, eine aktuelle Reckposition vorgegeben wird. Die Führungsrolle 17 wird vom Sekundärzylinder 16 gegen die Führungsbahn gedrückt. Der Schlitten 15 gleitet entlang von zwei Führungselementen 18.

Nach einem Schließen der im Bereich von Trägern 19, 20 angeordneten Formhälften 5, 6 erfolgt eine Verriegelung der Träger 19, 20 relativ zueinander mit Hilfe einer Verriegelungseinrichtung 40.

Zur Anpassung an unterschiedliche Formen eines Mündungsabschnittes 21 des Vorformlings 1 ist gemäß Fig. 2 die Verwendung separater Gewindeeinsätze 22 im Bereich der Blasform 4 vorgesehen.

Fig. 2 zeigt zusätzlich zum geblasenen Behälter 2 auch gestrichelt eingezeichnet den Vorformling 1 und schematisch eine sich entwickelnde Behälterblase 23.

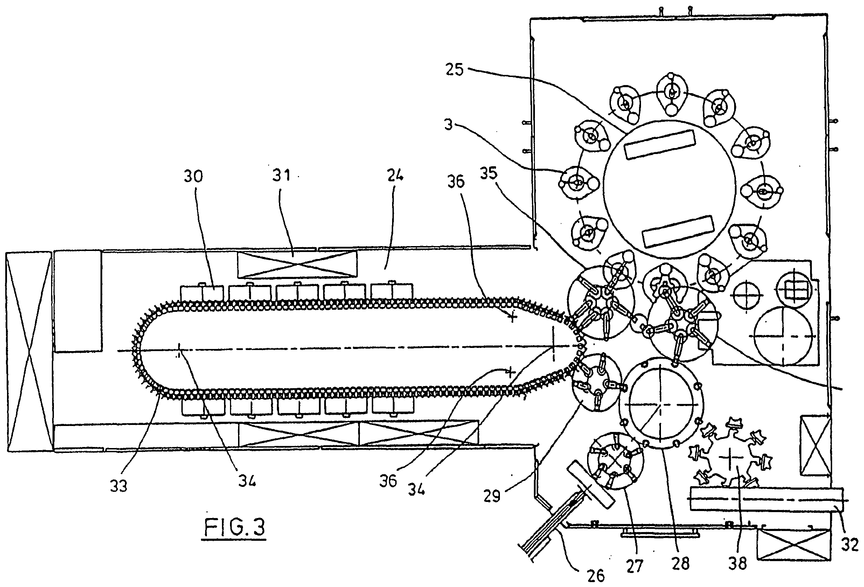

Fig. 3 zeigt den grundsätzlichen Aufbau einer Blasmaschine, die mit einer Heizstrecke 24 sowie einem rotierenden Blasrad 25 versehen ist. Ausgehend von einer Vorformlingseingabe 26 werden die Vorformlinge 1 von Übergaberädern 27, 28, 29 in den Bereich der Heizstrecke 24 transportiert. Entlang der Heizstrecke 24 sind Heizstrahler 30 sowie Gebläse 31 angeordnet, um die Vorformlinge 1 zu temperieren. Nach einer ausreichenden Temperierung der Vorformlinge 1 werden diese an das Blasrad 25 übergeben, in dessen Bereich die Blasstationen 3 angeordnet sind. Die fertig geblasenen Behälter 2 werden von weiteren Übergaberädern einer Ausgabestrecke 32 zugeführt.

Um einen Vorformling 1 derart in einen Behälter 2 umformen zu können, dass der Behälter 2 Materialeigenschaften aufweist, die eine lange Verwendungsfähigkeit von innerhalb des Behälters 2 abgefüllten Lebensmitteln, insbesondere von Getränken, gewährleisten, müssen spezielle Verfahrensschritte bei der Beheizung und Orientierung der Vorformlinge 1 eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings 1 während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke 24 aus einer Vielzahl umlaufender Transportelemente 33 ausgebildet ist, die kettenartig aneinandergereiht und entlang von Umlenkrädern 34 geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Übergaberad 29 und einem Eingaberad 35 zugewandten Ausdehnung der Heizstrecke 24 ein einzelnes relativ groß dimensioniertes Umlenkrad 34 und im Bereich von benachbarten Umlenkungen zwei vergleichsweise kleiner dimensionierte Umlenkräder 36 verwendet. Grundsätzlich sind aber auch beliebige andere Führungen denkbar.

Zur Ermöglichung einer möglichst dichten Anordnung des Übergaberades 29 und des Eingaberades 35 relativ zueinander erweist sich die dargestellte Anordnung als besonders zweckmäßig, da im Bereich der entsprechenden Ausdehnung der Heizstrecke 24 drei Umlenkräder 34, 36 positioniert sind, und zwar jeweils die kleineren Umlenkräder 36 im Bereich der Überleitung zu den linearen Verläufen der Heizstrecke 24 und das größere Umlenkrad 34 im unmittelbaren Übergabebereich zum Übergaberad 29 und zum Eingaberad 35. Alternativ zur Verwendung von kettenartigen Transportelementen 33 ist es beispielsweise auch möglich, ein rotierendes Heizrad zu verwenden.

Nach einem fertigen Blasen der Behälter 2 werden diese von einem Entnahmerad 37 aus dem Bereich der Blasstationen 3 herausgeführt und über das Übergaberad 28 und ein Ausgaberad 38 zur Ausgabestrecke 32 transportiert.

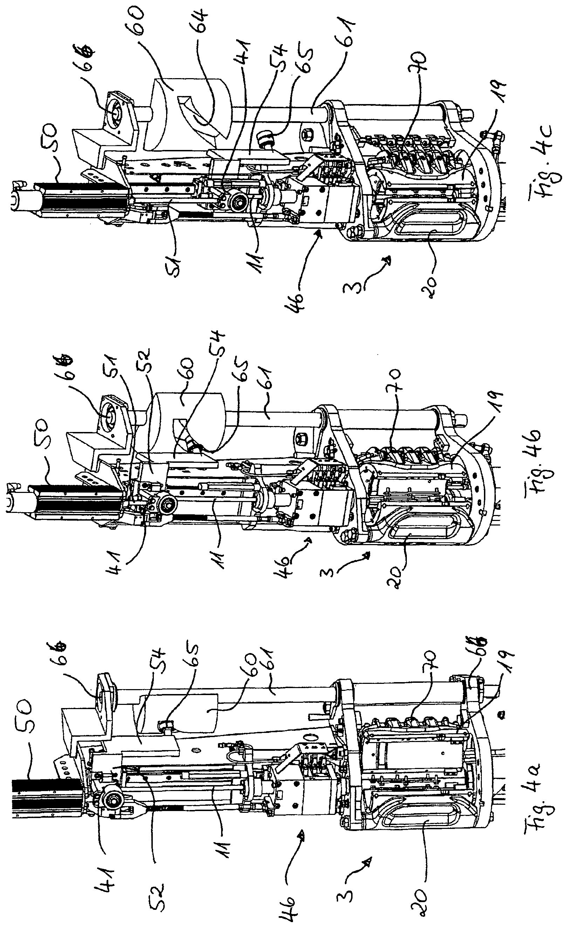

Die Figuren 4a bis 4c) zeigen eine erfindungsgemäße Blasstation 3, die gegenüber der in Fig. 1 dargestellten Blasstation erheblich abgewandelt ist, unter anderem daran erkennbar, dass der Vorformling 1 nunmehr mit seinem Mündungsabschnitt 21 nach oben ausgerichtet ist, und die Reckstange 11 von oben in den Vorformling 1 einfahren kann. Insbesondere ist aus dieser Darstellung erkennbar, dass die Reckstange 11 von einem Reckstangenträger 41 gehaltert ist, und am oberen Reckstangenende ein die Reckstange 11 zu einer Hubbewegung antreibender Linearmotor 50 angeordnet ist.

In den Figuren ist ebenfalls die Anordnung eines Pneumatikblockes 46 zur Blasdruckversorgung der Blasstation 3 erkennbar. Der Pneumatikblock 46 ist mit Hochdruckventilen ausgestattet, die über Anschlüsse an eine oder mehrere Druckversorgungen angeschlossen werden können. Nach einer Blasformung der Behälter 2 wird in eine Umgebung abzuleitende Blasluft über den Pneumatikblock 46 zunächst einem Schalldämpfer zugeführt.

Eine typische Durchführung des Blasvorganges kann am einfachsten anhand von Fig. 2 veranschaulicht werden. Nach einem Einsetzen des Vorformlings 1 in die Blasform 4 und einer Verriegelung der Blasstation 3 erfolgt zunächst ein Hineinfahren der Reckstange 11 in den Vorformling 1 bei gleichzeitiger Blasdruckunterstützung derart, dass der Vorformling 1 durch die axiale Reckung nicht auf die Reckstange 11 radial aufschrumpft.

Nach der in Fig. 2 dargestellten vollständigen Durchführung des Reckvorganges erfolgt die vollständige Expansion der Behälterblase 23 in die Endkontur des Behälters 2 und der maximale Innendruck wird so lange aufrecht erhalten, bis der Behälter 2 durch Abkühlung eine ausreichende Formstabilität erreicht hat. Nach dem Erreichen dieser Formstabilität wird die Blasdruckzufuhr abgeschaltet und die Reckstange 11 wird wieder aus der Blasform 4 und somit aus dem geblasenen Behälter 2 zurückgezogen.

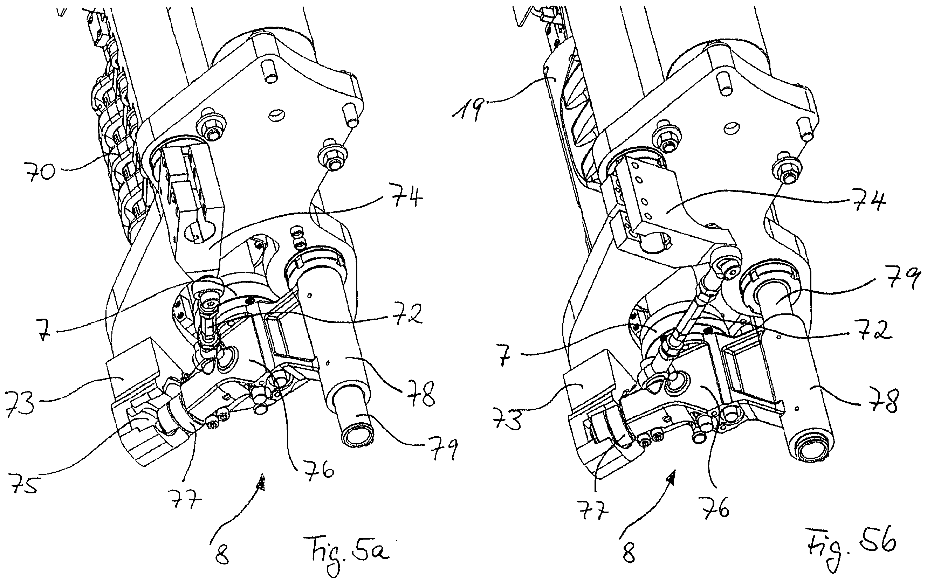

Die Fig. 4a) bis 4c) zeigen unterschiedliche Stellungen der positionierbaren Teile der Blasstation 3 zu unterschiedlichen Zeitpunkten des oben beschriebenen Blasformungsprozesses. Fig. 4a zeigt die Ausgangstellung. In dieser Stellung kann ein thermisch konditionierter Vorformling 1 in die Blasform 4 eingesetzt werden, um nachfolgend in einen Behälter 2 blasgeformt zu werden. Angetrieben von dem Linearmotor 50 schiebt eine Antriebsstange 51 den Reckstangenträger 41 und die vom Träger 41 gehaltene Reckstange 11 in vertikaler Richtung nach unten. Die Reckstange 11 weist ein- oder beidseitig einen Führungsschlitten 52 auf, der auf Führungselementen gleitet. In nicht dargestellter Weise ist der Reckstangenträger 41 mit einem Kopplungselement verbunden, das unter Verwendung einer nicht erkennbaren Gewindestange von dem Linearmotor 50 positionierbar ist. Eine entsprechende Anordnung ist z.B. in der DE 10 2009 006 508 A1 in den dortigen Figuren 5 bis 8 gezeigt, und in der dortigen Beschreibung in den Absätzen [0056] bis [0084] erläutert. Es wird auf diese Abbildungen und diese Beschreibung an dieser Stelle explizit Bezug genommen und zur Vermeidung einer Wiederholung des Inhalts durch diese Bezugnahme hier eingefügt.

Wie in der Fig. 7 der DE 10 2009 006 508 A1 gezeigt, kann der Pneumatikblock 46 z.B. als ein sogenannter Anschlusskolben ausgeführt sein, der zur Zuführung von Druckluft in den Innenraum des zu blasenden Behälters 2 hinein vorgesehen ist. Der Pneumatikblock 46 ist über nicht dargestellte Versorgungsleitungen an eine Blasgasversorgung angeschlossen und dient als relativ zur Blasform 4 positionierbar angeordnete Blasgaszuführung. Die Positionierbarkeit ist erforderlich, damit nach einem Einsetzen eines Vorformlings 1 in die Blasform 4 durch eine Hubbewegung eine druckdichte Verbindung zwischen dem Pneumatikblock 46 und der Blasform 4 bzw. zwischen dem Pneumatikblock 46 und dem Vorformling 1 bzw. dem zu blasenden Behälter 2 hergestellt werden kann.

Wie weiter in den Fig. 7 und 8 der DE 10 2009 006 508 A1 gezeigt und in den dortigen Absätzen [0077] bis [0084] erläutert ist der Pneumatikblock 46 über Gelenke, Hebel und andere Positionier- und Stellmittel mit der Reckstangenbewegung gekoppelt.

Gemäß dem in Fig. 4b dargestellten Betriebszustand, bei dem der Linearmotor 50 den Reckstangenträger 41 um eine Wegstrecke nach unten verschoben hat, ist der Pneumatikblock 46 abgesenkt und abgedichtet gegen die Blasform 4 bzw. den Vorformling 1 geführt. In diesem Betriebszustand kann eine Zuführung der Blasluft in den Vorformling hinein erfolgen. Die Reckstange 11 ist in diesem Betriebszustand noch nicht bis zum Boden 14 des Vorformlings 1 vorgeschoben.

Die Absenkbewegung der Reckstange 11 von der Ausgangsstellung in Fig. 4a in die Zwischenstellung in Fig. 4b wird erfindungsgemäß auch auf die Formhälften 19, 20 und auf die Bodenform 7 übertragen. Dazu weist der Reckstangenträger 41 ein Kopplungselement 54 auf, an dem seitlich ein Mitnehmer 65 angeordnet ist. Dieser Mitnehmer 65 gleitet entlang eines Mitnahmeprofils 64, das von einem Steuerkurvenblock 60 vorgegeben ist. Dieser Steuerkurvenblock 60 wiederum ist fest mit einer Steuerwelle 61 verbunden, die seitlich der Blasstation 3 und parallel zur Reckstange 11 verläuft. Die Steuerwelle 61 ist drehgelagert in einem oberen und einem unteren Lager 66 gehalten, und diese Lager 66 sind fest mit der Blasstation 3 bzw. mit der Tragstruktur der Blasstation 3 verbunden.

In der Ausgangsstellung der Fig. 4a befindet sich der Mitnehmer 65 am oberen Ende des Mitnahmeprofils 64. Bei Absenkung des Reckstangenträges 41 bewegt sich auch der Mitnehmer 65 nach unten und zwingt dadurch die den Steuerkurvenblock 60 tragende Steuerwelle 61 zu einer Drehung. In der in Fig. 4b dargestellten Stellung hat der Mitnehmer 65 das Ende des Mitnahmeprofils 64 erreicht. Das weitere Absenken des Reckstangenträgers 41 führt zu keiner weiteren Drehung der Steuerwelle 61, weil der Mitnehmer 65 außerhalb des Steuerkurvenblocks 60 weiterläuft. In der Phase zwischen der Ausgangstellung und dem Erreichen der Zwischenstellung werden die Blasformhälften 19, 20 geschlossen und die Bodenform 7 angehoben.

Beim Anheben der Reckstange 11 aus der Endstellung der Fig. 4c zurück in die Ausgangsstellung der Fig. 4a über die in Fig. 4b gezeigte Zwischenstellung wird der Mitnehmer 65 zunächst in die Einführöffnung des Mitnahmeprofils 64 eingeführt und gleitet anschließend entlang des Mitnahmeprofils 64. Erneut verursacht der im Mitnahmeprofil 64 geführte Mitnehmer 65 eine Schwenkbewegung der Steuerwelle 61. Diese Schwenkbewegung führt zu einem Öffnen der Blasformhälften 19, 20 und zu einem Absenken der Bodenform 7.

Zur Durchführung einer erneuten Blasformung erfolgt nach dem Einsetzen eines neuen Vorformlings 1 in die Blasform 4 wieder ein Absenken der Reckstange 11 und damit auch ein Absenken des Pneumatikblockes 46 sowie ein Schließen der Blasformhälften 19, 20 und ein Anheben der Bodenform 7.

Die Fig. 5a und 5b zeigen schematisch den mechanischen Antrieb für die Bewegungsabläufe im Bereich der Bodenform 7, der Bewegungsablauf der Blasformhälften 19, 20 ergibt sich besser aus den Abbildungen 4a bis 4c, ist aber im Ansatz auch in den Figuren 5a und 5b noch erkennbar. Die Blasformhälften 19, 20 sind relativ zu einer Stationsachse der Blasstation 3 verschwenkbar angeordnet. Über Betätigungsarme 70 sind die Blasformhälften 19, 20 mit der Steuerwelle 61 gekoppelt. Die Drehbewegung der Steuerwelle 61 wird in ein Öffnen und Schließen der Formträger (19, 20) transformiert, wie dies z.B. in Fig. 5 der DE 10 2004 045 405 A1 und in den Absätzen [0047] bis [0052] erläutert ist. Auch auf diese Figur und auf diese Beschreibungspassagen und deren Inhalt wird zur Vermeidung von Wiederholungen hiermit explizit Bezug genommen.

Die Steuerwelle 61 ist darüber hinaus mit einem Positionierhebel 72 gekoppelt. Der Positionierhebel 72 ist an seinem einen Ende gelenkig mit einem mit der Steuerwelle drehenden Kuppelkörper 74 verbunden, und am anderen Ende gelenkig mit dem Bodenformträger 76. Der Bodenformträger 76 weist an seinem einen Ende eine Führungshülse 78 auf, die auf einer feststehenden Stationsachse 79 dreht und in vertikaler Richtung darauf gleiten kann. Am anderen Ende weist der Bodenformträger 76 eine Kurvenrolle 77 auf, im gezeigten Ausführungsbeispiel ein Kurvenrollenpaar. Die Kurvenrolle 77 wird entlang einer Hubkurve 75 in einem Hubkurvenkörper 73 geführt, der fest mit der Blasstation 3 bzw. mit dessen Trägerstruktur verbunden ist.

Bei der in den Fig. 5a und 5b dargestellten Ausführungsform ist die Hubkurve 75 als nutförmige Vertiefung in dem Hubkurvenkörper 73 ausgeführt. Bei einer Drehbewegung der Steuerwelle 61 wird auch der Kuppelkörper 74 gedreht. Über den Positionierhebel 72 wird diese Drehung in eine auf den Bodenformträger 76 wirkende Zugkraft oder eine Druckkraft umgesetzt, die den Bodenformträger zu einem Drehen um die Stationsachse 79 zwingt. Aufgrund der in der Hubkurve 75 geführten Kurvenrolle 77 geht die Drehung des Bodenformträgers um die Stationsachse 79 einher mit einer Hubbewegung, so dass die Bodenform 7 synchron mit der Drehung der Steuerwelle 61 angehoben und abgesenkt wird.

Zur Erreichung eines Phasenversatzes zwischen einem Beginn bzw. einem Ende der Öffnungs- oder Schließbewegung der Formträger 19, 20 und dem Ablauf der Hubbewegung der Bodenform 7 kann die Hubkurve 75 mit einem horizontal verlaufenden Kurvenbereich versehen sein. Bei der vertikal verlaufenden Steuerwelle 61 wird durch eine Bewegung der Kurvenrolle 77 in einem horizontalen Bereich der Hubkurve 75 keine Hub- oder Senkbewegung der Bodenform 7 vorgegeben. Eine Vorgabe der Geschwindigkeit der Durchführung der Hub- bzw. Senkbewegung der Bodenform 7 erfolgt durch die Steilheit der Hubkurve 75.

## Patentansprüche

1. Verfahren zur Blasformung von Behältern (2), bei dem ein Vorformling (1) aus einem thermoplastischem Material in einer Blasstation (3) nach einer thermischen Konditionierung innerhalb einer zwei Blasformhälften (19, 20) und eine Bodenform (7) aufweisenden Blasform (4) von einer Reckstange (11) gereckt und durch Blasdruckeinwirkung in den Behälter (2) umgeformt wird, sowie bei dem ein den Blasdruck in den Vorformling (1) einspeisender und beherrschender Pneumatikblock (46) auf den Vorformling (1) dichtend zur Anlage gebracht wird und nach erfolgter Umformung wieder entfernt wird, wobei wenigstens eine Blasformhälfte (19; 20) und die Bodenform (7) angetrieben positionierbar ausgebildet sind, wobei die Blasformhälften (19, 20) und die Bodenform (7) aus einer Offenstellung, in der ein Vorformling (1) in die Blasform (4) einsetzbar und aus ihr entnehmbar ist, in eine Geschlossenstellung positioniert werden, wobei die Reckstange (11), der Pneumatikblock (46) angetrieben positioniert werden, **dadurch gekennzeichnet, dass** wenigstens drei der vorgenannten Positionierbewegungen der Blasstation (3) mechanisch bewegungsgekoppelt ausgeführt und von einer gemeinsamen Antriebseinrichtung (50, 51) angetrieben werden, wobei eine dieser wenigstens drei mechanisch bewegungsgekoppelt ausgeführten Positionierbewegungen der Blasstation (3) die Reckstangenbewegung ist.

2. Verfahren nach Anspruch 1, **dadurch gekennzeichnet, dass** die bewegungsgekoppelten Positionierbewegungen der Blasstation (3) die Reckstangenbewegung, die Bewegung der Blasformhälften (19, 20) und die Bewegung des Blasformbodens (7) umfassen, wobei insbesondere die Reckstangenbewegung durch eine mechanische Kopplung auf wenigstens eine der beiden Blasformhälften (19, 20) und auf den Blasformboden (7) übertragen wird.

3. Verfahren nach Anspruch 1 oder 2, **dadurch gekennzeichnet, dass** die Blasstation (3) auf einem rotierenden Blasrad (25) und auf dem Blasrad (25) mit diesem rotierend die Antriebseinrichtung, insbesondere der Reckstangenantrieb (50, 51), angeordnet ist oder wird, wobei insbesondere keine externe Kurvensteuerung am Blasrad (25) für die Blasstation (3) vorgesehen ist.

4. Verfahren nach Anspruch 3, **dadurch gekennzeichnet, dass** auf dem Blasrad (25) mehrere Blasstationen (3) vorgesehen sind, wobei jede Blasstation (3) des Blasrades (25) mit einer eigenen Antriebseinrichtung, insbesondere mit einem eigenen Reckstangenantrieb (50, 51) ausgestattet ist oder wird.

5. Verfahren nach einem der Ansprüche 1 bis 4, **dadurch gekennzeichnet, dass** die Bewegung des positionierbaren Pneumatikblockes (46) an die Bewegung der Reckstange (11) gekoppelt ist oder wird.

6. Verfahren nach einem der Ansprüche 1 bis 5, **dadurch gekennzeichnet, dass** die Blasform (4) positionierbare Verriegelungsmittel (40) aufweist, wobei insbesondere eine Positionierung der Verriegelungsmittel (40) von der Reckstangenbewegung abgeleitet wird.

7. Vorrichtung zur Blasformung von Behältern (2) aus einem thermoplastischen Material, die mindestens eine Blasstation (3) mit einer zwei Blasformhälften (19, 20) und eine Bodenform (7) aufweisenden Blasform (4) aufweist, wobei die Blasstation (3) mit einer Reckeinrichtung mit einer angetrieben positionierbaren Reckstange (11) versehen ist, die angeordnet ist, einen in die Blasform (4) eingesetzten Vorformling (1) mit einer Reckkraft zu beaufschlagen, sowie bei der die Blasstation (3) einen angetrieben positionierbaren, einen Blasdruck in den zu blasformenden Vorformling (1) einspeisenden Pneumatikblock (46) aufweist, der zur Blasformung auf den Vorformling (1) dichtend zur Anlage bringbar und nach erfolgter Umformung wieder entfernbar ist, wobei wenigstens eine der Blasformhälften (19; 20) und die Bodenform (7) angetrieben positionierbar ausgebildet sind, wobei die Blasformhälften (19, 20) und die Bodenform (7) aus einer Offenstellung, in der ein Vorformling (1) in die Blasform (4) einsetzbar und aus ihr entnehmbar ist, in eine Geschlossenstellung positionierbar sind, **dadurch gekennzeichnet, dass** die Vorrichtung ferner eine Antriebseinrichtung (50, 51) umfasst, mittels derer wenigstens drei der genannten angetrieben positionierbaren Komponenten der Blasstation (3) antreibbar oder positionierbar sind, wobei die mittels der Antriebseinrichtung (50, 51) antreibbaren bzw. positiönierbaren Komponenten mechanisch bewegungsgekoppelt ausgebildet sind, wobei eine dieser wenigstens drei angetrieben positionierbaren und mechanisch bewegungsgekoppelt ausgeführten Komponenten der Blasstation (3) die Reckstange (11) ist.

8. Vorrichtung nach Anspruch 7, **dadurch gekennzeichnet, dass** die Antriebseinrichtung (50, 51) als Reckstangenantrieb (50, 51) zum Antreiben der Reckstange (11) und als Blasformantrieb zum Antreiben der Blasformhälften (19, 20) und der Bodenform (7) ausgebildet ist.

9. Vorrichtung nach Anspruch 8, **dadurch gekennzeichnet, dass** die Blasstation (3) mechanische Ableitmittel (54, 65, 60, 64, 61, 70, 72, 73, 74, 76, 77, 78, 79) aufweist, die eine Reckstangenbewegung auf die Blasformhälften (19, 20) und auf den Blasformboden (7) übertragend ausgebildet sind.

10. Vorrichtung nach Anspruch 9, **dadurch gekennzeichnet, dass** die mechanischen Ableitmittel eine Kurvensteuerung (54, 65, 60, 64) mit einer Steuerkurve (60, 64) und einem Abnehmer (54, 65) aufweisen, wobei insbesondere der Abnehmer (54, 65) reckstangenseitig und die Steuerkurve (60, 64) blasformhälftenseitig angeordnet ist.

11. Vorrichtung nach einem der Ansprüche 9 oder 10, **dadurch gekennzeichnet, dass** die mechanischen Ableitmittel weiterhin eine drehbar gelagerte, im wesentlichen parallel zur Reckstange (11) verlaufend angeordnete Schwenkachse (61) aufweisen, die mit der Kurvensteuerung (54, 65, 60, 64) so zusammenwirkt, dass die translatorische Reckstangenbewegung in eine rotative Schwenkachsenbewegung umgesetzt ist, wobei die Schwenkachse (61) mechanisch mit der Bodenform (7) und den Blasformhälften (19, 20) so gekoppelt ist, dass die Drehung der Schwenkachse (61) die Blasformen (19, 20) und die Bodenformen (7) öffnet und schließt, wobei sich die Steuerkurve (60, 64) insbesondere nur über einen Teilweg der Reckstangenbewegung erstreckt.

12. Vorrichtung nach einem der Ansprüche 7 bis 11, **dadurch gekennzeichnet, dass** die Blasstation (3) auf einem rotierenden Blasrad (25) und auf dem Blasrad (25) mit diesem rotierend die Antriebseinrichtung (50, 51) angeordnet ist, wobei insbesondere das Blasrad (25) ohne externe Kurvensteuerung für die Blasstation (3) ausgebildet ist.

13. Vorrichtung nach Anspruch 12, **dadurch gekennzeichnet, dass** auf dem Blasrad (25) mehrere Blasstationen (3) angeordnet sind, wobei jede Blasstation (3) eine eigene, nur dieser Blasstation (3) zugewiesene Antriebseinrichtung (50, 51) aufweist.

14. Vorrichtung nach einem der Ansprüche 7 bis 13, **dadurch gekennzeichnet, dass** die Blasstation (3) die Bewegung des positionierbaren Pneumatikblockes (46) an die Bewegung der Reckstange (11) koppelnde Koppelmittel aufweist. '

15. Vorrichtung nach einem der Ansprüche 7 bis 16, **dadurch gekennzeichnet, dass** die Blasform (4) positionierbare Verriegelungsmittel (40) aufweist, und die Blasstation (3) die Positionierung der Verriegelungsmittel (40) von der Reckstangenbewegung ableitende Ableitmittel aufweist.

16. Vorrichtung nach einem der Ansprüche 7 bis 15, **dadurch gekennzeichnet, dass** die Antriebseinrichtung (50, 51) einen Linearmotor (50) umfasst.

17. Verwendung einer Vorrichtung nach einem der Ansprüche 7 bis 16 zum Ausführen eines Verfahrens nach einem der Ansprüche 1 bis 6.

## Claims

1. Method for the blow moulding of containers (2), in which a preform (1) made of thermoplastic material is stretched in a blowing station (3) after a thermal conditioning within a blow mould (4) comprising two blow-mould halves (19, 20) and a mould base (7) by a drawing bar (11) and is reshaped into the container (2) by means of the blowing pressure effect, as well as in which a pneumatic block (46) feeding and controlling the blowing pressure into the preform (1) is brought to rest onto the preform (1) in a sealing manner and is removed again after reshaping has taken place, wherein at least one blow-mould half (19, 20) and the mould base (7) are designed to be positionable in a driven manner, wherein the blow-mould halves (19, 20) and the mould base (7) are positioned from an open position, in which a preform (1) can be inserted into the blow mould (4) and can be removed from it, into a closed position, wherein the drawing bar (11) and the pneumatic block (46) are positioned in a driven manner, **characterized in that** at least three of the aforementioned positioning movements of the blowing station (3) are mechanically carried out in a motion-coupled manner and are driven by a common drive device (50, 51), wherein one of these at least three positioning movements of the blowing station (3) mechanically carried out in a motion-coupled manner is the drawing-bar movement.

2. Method according to Claim 1, **characterized in that** the motion-coupled positioning movements of the blowing station (3) comprise the drawing-bar movement, the movement of the blow-mould halves (19, 20), and the movement of the blow-mould base (7), wherein, in particular, the drawing-bar movement is transferred onto at least one of the two blow-mould halves (19, 20) and onto the blow-mould base (7) by a mechanical coupling.

3. Method according to Claim 1 or 2, **characterized in that** the blowing station (3) is arranged on a rotating blowing wheel (25) and, in particular, the drive device, in particular, the drawing-bar drive (50, 51), is arranged on the blowing wheel (25) rotating with this, wherein, in particular, no external cam control is provided on the blowing wheel (25) for the blowing station (3).

4. Method according to Claim 3, **characterized in that** a plurality of blowing stations (3) are provided on the blowing wheel (25), wherein each blowing station (3) of the blowing wheel (25) is equipped with a separate drive device, in particular, with a separate drawing bar (50, 51) .

5. Method according to one of the Claims 1 to 4, **characterized in that** the movement of the positionable pneumatic block (46) is coupled to the movement of the drawing bar (11).

6. Method according to one of the Claims 1 to 5, **characterized in that** the blow mould (4) comprises positionable locking means (40), wherein, in particular, a positioning of the locking means (40) is derived from the drawing-bar movement.

7. Device for the blow moulding of containers (2) made of a thermoplastic material, which comprises at least one blowing station (3) with a blow mould (4) comprising two blow-mould halves (19, 20) and a mould base (7), wherein the blowing station (3) is provided with a stretching device with a drawing bar (11) that can be positioned in a driven manner, which is arranged to impinge a preform (1) inserted into the blow mould (4) with a stretching force, as well as in which the blowing station (3) comprises a pneumatic block (46) that can be positioned in a driven manner and feeds a blowing pressure into the preform (1) be to blow moulded, which can be brought to rest onto the preform (1) in a sealing manner for blow moulding and be removed again after reshaping has taken place, wherein at least one of the blow-mould halves (19, 20) and the mould base (7) are designed to be positionable in a driven manner, wherein the blow-mould halves (19, 20) and the mould base (7) can be positioned from an open position, in which a preform (1) can be inserted into the blow mould (4) and be removed from it again, into a closed position, **characterized in that** the device furthermore comprises a drive device (50, 51), by means of which at least three of the aforementioned components of the blowing station (3), which can be positioned in a driven manner, can be driven or positioned, wherein the component, which can be driven or positioned by means of the drive device (50, 51) are designed to be mechanically motioned-coupled, wherein one of these at least three driven positionable and mechanically motion-coupled components of the blowing station (3) is the drawing bar (11).

8. Method according to Claim 7, **characterized in that** the drive device (50, 51) is designed as a drawing-bar drive (50, 51) for driving the drawing bar (11) and designed as a blow-mould drive for driving the blow-mould halves (19, 20) and the mould base (7).

9. Device according to Claim 8, **characterized in that** the blowing station (3) comprises mechanical deriving means (54, 65, 60, 64, 61, 70, 72, 73, 74, 76, 77, 78, 79) that are designed to transfer a drawing-bar movement onto the blow-mould halves (19, 20) and onto the blow-mould base (7).

10. Device according to Claim 9, **characterized in that** the mechanical deriving means comprise a cam control (54, 65, 60, 64) with a control cam (60, 64) and a pickup (54, 65), wherein, in particular, the pickup (54, 65) is arranged on the draw-bar side and the control cam (60, 64) is arranged on the blow-mould-half side.

11. Device according to any one of Claims 9 or 10, **characterized in that** the mechanical deriving means furthermore comprises a rotatably mounted pivot axis (61) arranged substantially parallel to the drawing bar (11), which pivot axis (61) interacts with the cam control (54, 65, 60, 64) in such a way that the translational drawing-bar movement is converted into a rotary pivot-axis movement, wherein the pivot axis (61) is mechanically coupled to the mould base (7) and the blow-mould halves (19, 20) in such a way that the rotation of the pivot axis (61) opens and closes the blow moulds (19, 20) and the mould bases (7), wherein the control cam (60, 64), in particular, extends only across a partial path of the drawing-bar movement.

12. Device according to one of the Claims 7 to 11, **characterized in that** the blowing station (3) is arranged on a rotating blowing wheel (25) and the drive device (50, 51) is arranged on the blowing wheel (25) rotating with this, wherein, in particular, the blowing wheel (25) is formed with an external cam control for the blowing station (3).

13. Device according to Claim 12, **characterized in that** a plurality of blowing stations (3) are arranged on the blowing wheel (25), wherein each blowing station (3) comprises a separate drive device (50, 51) assigned to this blowing station (3).

14. Device according to one of the Claims 7 to 13, **characterized in that** the blowing station (3) comprises coupling means coupling the movement of the positionable pneumatic block (46) to the movement of the drawing bar (11).

15. Device according to one of the Claims 7 to 16, **characterized in that** the blow mould (4) comprises positionable locking means (40), and the blowing station (3) comprises a deriving means deriving the positioning of the locking means (40) from the drawing-bar movement.

16. Device according to one of the Claims 7 to 15, **characterized in that** the drive device (50, 51) comprises a linear motor (50).

17. Use of a device according to one of the Claims 7 to 16 for carrying out a method according to one of the Claims 1 to 6.

## Revendications

1. Procédé de moulage par soufflage de récipients (2) dans une station de soufflage (3) dans le cadre duquel une préforme (1) en un matériau thermoplastique, après un conditionnement thermique, est étirée par une barre d'étirage (11) à l'intérieur d'un moule de soufflage (4) présentant deux demi-moules (19, 20) et une pièce de moulage du fond (7) et, sous l'action d'une pression de soufflage, transformée en un récipient (2), et dans le cadre duquel un bloc pneumatique (46) alimentant la préforme (1) en pression de soufflage et contrôlant cette pression est appliqué contre la préforme (1) en contact étanche puis, le moulage effectué, à nouveau retiré, un demi-moule (19, 20) au moins et la pièce de moulage du fond (7) étant conformés de façon à pouvoir être positionnés par un entraînement, les demi-moules (19, 20) et la pièce de moulage du fond (7) étant positionnés d'une position ouverte permettant d'introduire une préforme (1) dans le moule de soufflage (4) et de l'en retirer en une position fermée, la barre d'étirage (11), le bloc pneumatique (46) étant positionnés par un entraînement, **caractérisé en ce qu'**au moins trois des mouvements de positionnement mentionnés ci-dessus de la station de soufflage (3) sont effectués avec un couplage cinématique mécanique et entraînés par un dispositif d'entraînement (50, 51) commun, l'un de ces trois ou plus mouvements de positionnement de la station de soufflage (3) effectués avec un couplage cinématique mécanique étant le mouvement de la barre d'étirage.

2. Procédé selon la revendication 1, **caractérisé en ce que** les mouvements de positionnement cinématiquement couplés de la station de soufflage (3) comprennent le mouvement de la barre d'étirage, le mouvement des demi-moules (19, 20) et le mouvement du fond (7) du moule de soufflage, le mouvement de la barre d'étirage notamment étant transmis à l'un au moins des deux demi-moules (19, 20) et au fond (7) du moule de soufflage par un couplage mécanique.

3. Procédé selon la revendication 1 ou 2, **caractérisé en ce que** sont agencés ou viennent s'agencer sur une roue de soufflage (25) rotative la station de soufflage (3) et, tournant avec la roue de soufflage (25), le dispositif d'entraînement et notamment l'entraînement (50, 51) de la barre d'étirage, le procédé ne prévoyant notamment pas de commande à came externe sur la roue de soufflage (25) pour la station de soufflage (3).

4. Procédé selon la revendication 3, **caractérisé en ce que** plusieurs stations de soufflage (3) sont prévues sur la roue de soufflage (25), un dispositif d'entraînement propre, notamment un entraînement (50, 51) propre de barre d'étirage, équipant ou venant équiper chaque station de soufflage (3) de la roue de soufflage (25).

5. Procédé selon l'une des revendications 1 à 4, **caractérisé en ce que** le mouvement du bloc pneumatique (46) positionnable est couplé ou vient s'accoupler avec le mouvement de la barre d'étirage (11).

6. Procédé selon l'une des revendications 1 à 5, **caractérisé en ce que** le moule de soufflage (4) présente des moyens de verrouillage (40) positionnables, un positionnement des moyens de verrouillage (40) étant notamment dérivé du mouvement de la barre d'étirage.

7. Dispositif de moulage par soufflage de récipients (2) en un matériau thermoplastique, présentant au moins une station de soufflage (3) avec un moule de soufflage (4) doté de deux demi-moules (19, 20) et d'une pièce de moulage du fond (7), la station de soufflage (3) étant équipée d'un dispositif d'étirage avec une barre d'étirage (11) pouvant être positionnée par un entraînement et agencée de façon à exercer une force d'étirage sur une préforme (1) introduite dans le moule de soufflage (4), et dont la station de soufflage (3) présente un bloc pneumatique (46) pouvant être positionné par un entraînement et introduisant une pression de soufflage dans la préforme (1) à mouler, ce bloc pouvant être appliqué en contact étanche sur la préforme (1) en vue du moulage par soufflage puis, le moulage effectué, à nouveau retiré, l'un au moins des demi-moules (19, 20) et la pièce de moulage du fond (7) étant conformés de façon à pouvoir être positionnés par un entraînement, les demi-moules (19, 20) et la pièce de moulage du fond (7) pouvant être positionnés d'une position ouverte permettant d'introduire une préforme (1) dans le moule de soufflage (4) et de l'en retirer en une position fermée, **caractérisé en ce que** le dispositif comporte en outre un dispositif d'entraînement (50, 51) au moyen duquel trois au moins desdits composants de la station de soufflage (3) positionnables par un entraînement peuvent être entraînés ou positionnés, les composants entraînables ou positionnables au moyen du dispositif d'entraînement (50, 51) étant conçus avec un couplage cinématique, l'un de ces trois ou plus composants de la station de soufflage (3) positionnables par un entraînement et cinématiquement couplés étant la barre d'étirage (11).

8. Dispositif selon la revendication 7, **caractérisé en ce que** le dispositif d'entraînement (50, 51) est conçu comme entraînement (50, 51) de barre d'étirage assurant le mouvement de la barre d'étirage (11) et comme entraînement de moule de soufflage assurant le mouvement des demi-moules (19, 20) et du fond du moule (7).

9. Dispositif selon la revendication 8, **caractérisé en ce que** la station de soufflage (3) comporte des moyens de dérivation mécaniques (54, 65, 60, 64, 61, 70, 72, 73, 74, 76, 77, 78, 79) conçus de façon à transmettre un mouvement de la barre d'étirage aux demi-moules (19, 20) et au fond (7) du moule de soufflage.

10. Dispositif selon la revendication 9, **caractérisé en ce que** les moyens de dérivation mécaniques présentent une commande à came (54, 65, 60, 64) avec une came de commande (60, 64) et un suiveur (54, 65) avec notamment un agencement tel que le suiveur (54, 65) est disposé du côté de la barre d'étirage et la came de commande (60, 64) du côté des demi-moules.

11. Dispositif selon l'une des revendications 9 ou 10, **caractérisé en ce que** les moyens de dérivation mécaniques présentent en outre un axe de pivotement (61) de disposition essentiellement parallèle à la barre d'étirage (11) logé de façon à pouvoir pivoter, cet axe concourant avec la commande à came (54, 65, 60, 64) de façon telle que le mouvement de translation de la barre d'étirage est transformé en un mouvement de rotation de l'axe de pivotement, l'axe de pivotement (61) étant mécaniquement couplé à la pièce de moulage du fond (7) et aux demi-moules (19, 20) de façon telle que la rotation de l'axe de pivotement (61) ouvre et ferme les moules de soufflage (19, 20) et les pièces de moulage du fond (7), la came de commande (60, 64) ne s'étendant notamment que sur une partie de la course de la barre d'étirage.

12. Dispositif selon l'une des revendications 7 à 11, **caractérisé en ce que** sont agencés sur une roue de soufflage (25) rotative la station de soufflage (3) et, tournant avec la roue de soufflage (25), le dispositif d'entraînement (50, 51), la roue de soufflage (25) étant notamment façonnée sans commande à came externe pour la station de soufflage (3).

13. Dispositif selon la revendication 12, **caractérisé en ce que** plusieurs stations de soufflage (3) sont agencées sur la roue de soufflage (25), chaque station de soufflage (3) étant munie de son propre dispositif d'entraînement (50, 51) uniquement associé à cette même station de soufflage (3).

14. Dispositif selon l'une des revendications 7 à 13, **caractérisé en ce que** la station de soufflage (3) présente des moyens d'accouplement assurant le couplage du mouvement du bloc pneumatique (46) positionnable et du mouvement de la barre d'étirage (11).

15. Dispositif selon l'une des revendications 7 à 16, **caractérisé en ce que** le moule de soufflage (4) présente des moyens de verrouillage (40) positionnables et que la station de soufflage (3) présente des moyens de dérivation dérivant le positionnement des moyens de verrouillage (40) du mouvement de la barre d'étirage.

16. Dispositif selon l'une des revendications 7 à 15, **caractérisé en ce que** le dispositif d'entraînement (50, 51) comporte un moteur linéaire (50).

17. Utilisation d'un dispositif selon l'une des revendications 7 à 16 pour la mise en œuvre d'un procédé selon l'une des revendications 1 à 6.
